# EUROPÄISCHE PATENTSCHRIFT

(11) **EP 3 225 571 B1**
(45) Veröffentlichungstag und Bekanntmachung des Hinweises auf die Patenterteilung: **06.03.2019**
(21) Anmeldenummer: 17162349.9
(22) Anmeldetag: 22.03.2017
(51) Int. Cl.: B65G 19/02, B65G 47/61

(54) **FÖRDERVORRICHTUNG ZUR BEFÖRDERUNG VON HÄNGENDEN GEGENSTÄNDEN**
CONVEYING DEVICE FOR CONVEYING HANGING ITEMS
DISPOSITIF DE TRANSPORT D'OBJETS SUSPENDUS

(30) Priorität: 29.03.2016 DE 102016105715
(43) Veröffentlichungstag der Anmeldung: 04.10.2017
(73) Patentinhaber: Dematic GmbH, 63150 Heusenstamm (DE)
(72) Erfinder: Otto, Thomas, 33659 Bielefeld (DE)
(74) Vertreter: Moser Götze & Partner Patentanwälte mbB

(56) Entgegenhaltungen:
- EP-A1- 0 416 337
- EP-A1- 2 818 434
- EP-A1- 2 886 494
- DE-U1- 29 709 547

## Beschreibung

Die vorliegende Erfindung betrifft eine Fördervorrichtung zur Beförderung von hängenden Gegenständen gemäß dem Oberbegriff des Anspruchs 1.

Gattungsgemäße Fördervorrichtungen, die zur Beförderung von hängenden Gegenständen wie beispielsweise Kleidungsstücke, Taschen und dergleichen dienen, bestehen im Wesentlichen aus Schienenprofilen, in denen in einer oberen Laufbahn eine Förderkette geführt wird, die mit in einer unteren Laufbahn der Schienenprofile geführten Halteadapter gekoppelt sind und von der Förderkette in einer Förderrichtung mitgeführt werden.

Um einzelne Halteadapter aus einem durch ein solches Schienenprofil gebildeten ersten Förderkreis in ein zweites Schienenprofil zu überführen, sind die Schienenprofile über sogenannte Weichen miteinander verbunden.

Problematisch ist, dass insbesondere bei Taschen oder Kleidungsstücken wie Jacken, T-Shirts und dergleichen, die senkrecht zur Förderrichtung eine bestimmte Breite aufweisen, während des Transports über die Weiche von nachfolgenden, entlang des Schienenprofils weiterbefördernden Gegenständen angestoßen werden, dadurch in Schwingungen oder Rotation geraten und dadurch zu Störungen im Weitertransport führen, bei dem die Förderkette angehalten werden muss.

Der Weitertransport der zu befördernden Gegenständen in den Weichen erfolgt dabei üblicherweise über separate Antriebsvorrichtungen mit Motoren, die eine der Weiche zugeordnete Förderkette oder dergleichen antreiben, welche ihrerseits die zu befördernden Gegenständen entlang der Weiche befördert.

Die Ansteuerung der Förderkette der Weiche muss dabei mit der Ansteuerung der Förderkette des ersten Schienenprofils gekoppelt werden, um sicherzustellen, dass die über die Weiche abtransportierten, an den Halteadaptern hängenden Gegenstände mit hinreichender Geschwindigkeit von dem ersten Schienenprofil wegtransportiert werden, um ein Anstoßen von entlang des ersten Schienenprofils weitertransportierten Gegenständen mit solchen Gegenständen, die über die Weiche abtransportiert werden, zu vermeiden.

Die EP 0 416 337 A1 offenbart einen Speicherförderer mit einer Aufgabe- und einer Austragstelle, bei dem vor der Austragsstelle eine Austrageinrichtung angeordnet ist. Diese Austrageinrichtung wird durch ein separat angetriebenes Förderband gebildet, das zwischen den beiden Trums der horizontal umlaufenden Förderkette angeordnet ist. Das Förderband ist so geführt, dass es aus einer unterhalb der Förderkette befindlichen Ebene in eine oberhalb dazu befindlichen verläuft. Die auf der Förderkette mit dem Kopfbereich aufliegenden Bügelhaken werden von dem Förderband an der Spitze erfasst, von der Förderkette abgehoben und an eine Gleitschiene an der Austragstelle übergeben, wo sie unter Einwirkung der Schwerkraft wieder mit dem Kopfbereich entlanggleiten. Durch diese Ausgestaltung des Förderers ist es möglich, die Bügel geradlinig auszutragen, so dass eine hohe Dynamik möglich ist. Wenn das Förderband schneller umläuft als die Förderkette, findet gleichzeitig mit dem Abheben der Bügel ein Vereinzelungsvorgang statt. DE 297 09 547 U1 zeigt eine Fördervorrichtung nach dem Oberbegriff des Anspruchs 1.

Aufgabe der vorliegenden Erfindung ist es, eine gattungsgemäße Fördervorrichtung derart weiterzuentwickeln, dass ein solches oben beschriebenes Zusammenstoßen der hängenden Gegenstände in einfacher und kostengünstiger Weise vermieden wird.

Diese Aufgabe wird durch eine Fördervorrichtung zur Beförderung von hängenden Gegenständen mit den Merkmalen des Anspruchs 1 gelöst.
Die Fördervorrichtung zur Beförderung von hängenden Gegenständen weist ein erstes Schienenprofil mit einer ersten, oberen Laufbahn und einer unterhalb der ersten Laufbahn angeordneten zweiten Laufbahn auf. Die Fördervorrichtung weist des Weiteren eine durch Reibrollen antreibbare Förderkette auf, die in der ersten Laufbahn des Schienenprofils in einer Förderrichtung kontinuierlich bewegbar ist. Des Weiteren weist die Fördervorrichtung Halteadapter auf, zur Halterung von zu befördernden Gegenständen, mit jeweils einem in der zweiten Laufbahn des Schienenprofils rollbar gelagerten Kopfteil, das mit der Förderkette gekoppelt ist. Die Fördervorrichtung weist außerdem wenigstens einen Sortierabschnitt mit einer in Förderrichtung nachfolgenden Weiche auf. Über diese Weiche sind die Halteadapter aus dem ersten Schienenprofil heraus in ein zweites Schienenprofil überführbar.
Die Weiche weist dabei einen Übertrieb und ein Antriebsband auf, wobei der Übertrieb derart ausgelegt ist, dass die Laufgeschwindigkeit des Antriebsbandes im Betrieb größer ist als die Laufgeschwindigkeit der Förderkette.
Durch die Bestückung der Weiche mit einem solchen Übertrieb ist es ermöglicht, die Weiche ohne eigenen Antrieb auszubilden.

Durch die Auslegung des Übertriebs derart, dass die Laufgeschwindigkeit des Antriebsbandes im Betrieb größer ist als die Laufgeschwindigkeit der Förderkette ist des Weiteren in einfacher Weise sichergestellt, dass die über die Weiche abtransportierten zu befördernden Gegenstände sich schneller bewegen als im ersten Schienenprofil verbleibende, an der Weiche vorbei transportierte Gegenstände und damit ein Zusammenstoßen solcher Gegenstände in einfacher und effektiver Weise verhindert wird.
Vorteilhafte Ausführungsvarianten der Erfindung sind Gegenstand der Unteransprüche.

Gemäß der Erfindung weist der Übertrieb eine mit der im ersten Schienenprofil angeordneten Förderkette gekoppelte Antriebsrolle und eine mit dieser über ein Kopplungselement gekoppelte, das Antriebsband antreibende Übertragungsrolle auf.

Durch die Kopplung der Antriebsrolle mit der Förderkette im ersten Schienenprofil ist auch bei Betreiben der Förderkette mit variierender Geschwindigkeit stets sichergestellt, dass die über die Weiche abtransportierten Gegenstände stets mit größerer Geschwindigkeit als die Laufgeschwindigkeit der Förderkette transportiert werden.

Insbesondere ist auf einer der ersten Drehachse der Antriebsrolle eine erste Übersetzungsrolle drehfest zur ersten Drehachse gelagert, die über das Kopplungselement mit einer auf einer zweiten Drehachse drehfest gelagerten zweiten Übersetzungsrolle gekoppelt ist, wobei auf der zweiten Drehachse die mit dem Antriebsband gekoppelte Übertragungsrolle drehfest zur Drehachse gelagert ist.
Das Kopplungselement selbst ist dabei vorzugsweise als Riemen ausgebildet.
Durch den Einsatz solcher Übersetzungsrollen ist es ermöglicht, je nach Gewicht oder Größe der zu befördernden Gegenstände die Fördervorrichtung entsprechend dahingehend anzupassen, dass die Differenzgeschwindigkeit zwischen der Förderkette und dem Antriebsband entsprechend ausgelegt werden kann.
Zur Weiterbeförderung der Halteadapter in Förderrichtung in der Weiche sind nach einer bevorzugten Ausführungsvariante an einer Außenfläche des Antriebsbandes senkrecht zur Förderrichtung vorstehende Erhebungen ausgebildet.
Diese Erhebungen sind besonders bevorzugt als elastisch biegbare Finger ausgebildet. Ein solches Antriebsband ist einfach und kostengünstig herstellbar. Mit solchen insbesondere als elastisch biegbare Finger ausgebildeten Erhebungen ist ein einfacher und zuverlässiger Transport der Halteadapter ermöglicht.

Nachfolgend wird eine bevorzugte Ausführungsvariante der Erfindung anhand der beiliegenden Zeichnungen näher erläutert. Es zeigen:
Figur 1 eine schematische Draufsicht auf eine Ausführungsvariante einer erfindungsgemäßen Fördervorrichtung mit mehreren entlang des ersten Schienenprofils hintereinander geschalteten Weichen.
Figur 2 eine schematische Draufsicht auf einen mit II in Figur 1 bezeichneten Ausschnitt einer Ausführungsvariante einer erfindungsgemäßen Fördervorrichtung mit Darstellung eines ersten Schienenprofils und einer Weiche,
Figur 3 eine Seitenansicht auf die in Figur 2 gezeigte Fördervorrichtung,
Figur 4 eine weitere Seitenansicht der in Figur 2 gezeigten Fördervorrichtung mit weggelassenem Abdeckblech der Weiche zur Darstellung des Übertriebs.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Fördervorrichtung, der Schienenprofile, der Laufbahn, der Förderkette, der Weiche, des Übertriebs und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

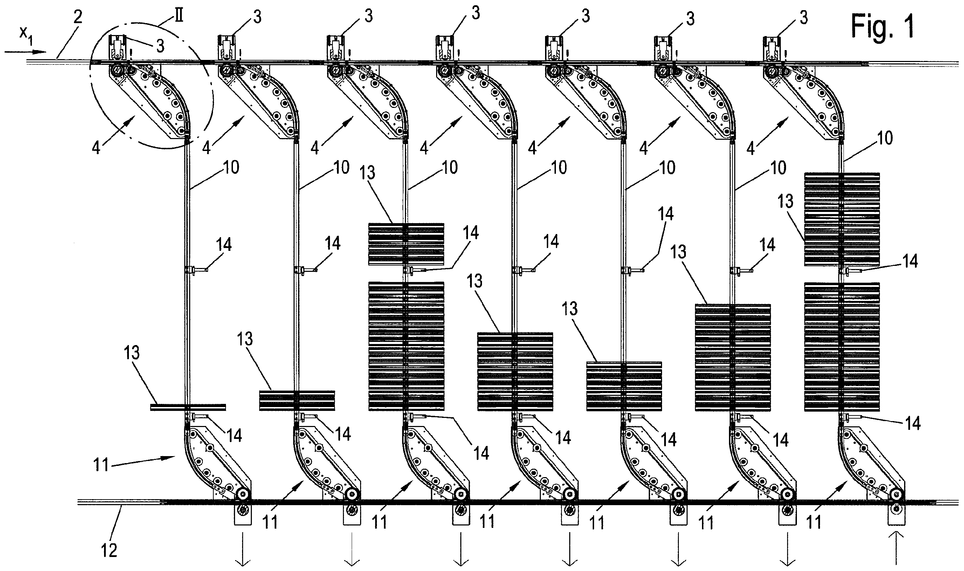

In der Figur 1 ist beispielhaft ein Ausschnitt einer Fördervorrichtung zur Beförderung von hängenden Gegenständen gezeigt. Die Fördervorrichtung weist dabei ein umlaufendes erstes Schienenprofil 2 auf, welches als sogenannter Sorter betrieben wird, wobei die zu befördernden Gegenstände 13entlang des ersten Schienenprofils 2 in einer Förderrichtung x befördert werden. An einer (nicht dargestellten) Aufgabestelle werden die zu befördernden Gegenstände 13 in das erste Schienenprofil 2 aufgegeben.

An einer oder mehreren Positionen des ersten Schienenprofils 2 sind Weichen 4 entlang des ersten Schienenprofils 2 angeordnet, an denen die zu befördernden Gegenstände mithilfe einer Identifiziereinheit identifiziert werden und nach erfolgter Identifizierung entweder entlang des ersten Schienenprofils 2 weitertransportiert oder durch Umstellen der Weiche 4 über die jeweilige Weiche 4 aus dem ersten Schienenprofil 2 in ein zweites Schienenprofil 10 überführt und entlang des zweiten

Schienenprofils 10 weiter transportiert werden.

Bei der in Figur 1 gezeigten Variante der Fördervorrichtung dienen die zweiten Schienenprofile 10 als temporäres Zwischenlager, in dem die zu befördernden Gegenstände 13 zeitweise zwischengelagert werden.

Die am zweiten Schienenprofil 10 gelagerten zu befördernden Gegenstände 13 werden im weiteren Verlauf über weitere Weichen 11 in ein drittes Schienenprofil 12 weitertransportiert.

Die Steuerung dieses Weitertransports erfolgt dabei vorzugsweise über Stoppeinrichtungen 14, über die der Weitertransport der zu befördernden Gegenstände 13 über die Weichen 11 in das dritte Schienenprofil 12, elektronisch gesteuert, erfolgt. Das dritte Schienenprofil 12 ist dabei vorzugsweise als sogenannter Abzugsförderer ausgebildet.

Um einen reibungslosen Übergang der zu befördernden Gegenstände 13 von dem ersten Schienenprofil 2 über die jeweilige Weiche 4 in das zweite Schienenprofil 10 zu ermöglichen, ist die Laufgeschwindigkeit eines Antriebsbandes 7 der Weiche 4 im Betrieb größer als die Laufgeschwindigkeit einer Förderkette 9 des ersten Schienenprofils 2.

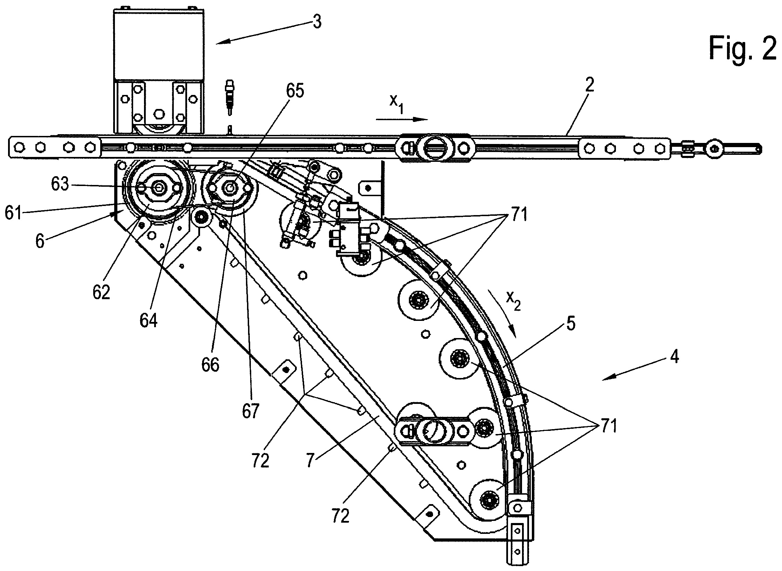

Eine solche Weiche 4 und deren Schnittstelle mit dem ersten Schienenprofil 2 ist in den Figuren 2-4 gezeigt.

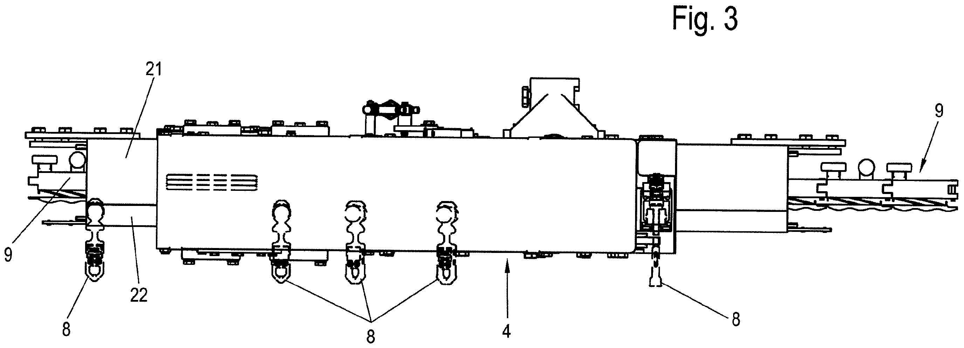

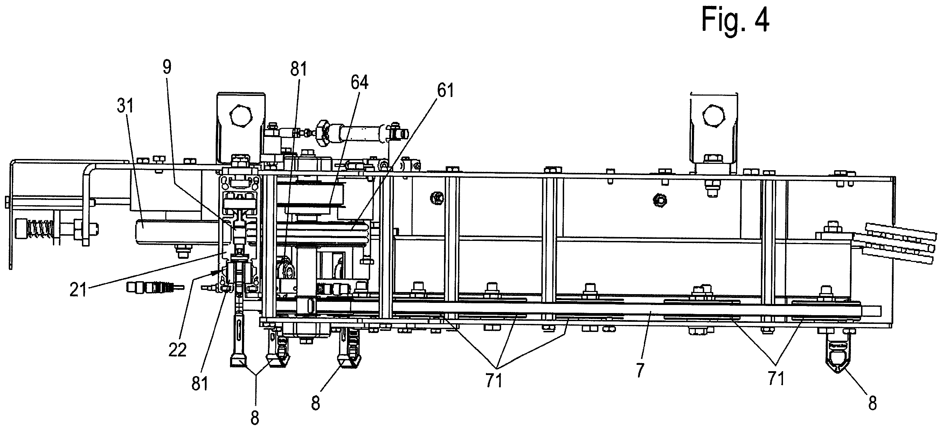

Wie in den Figuren 3 und 4 gezeigt, weist das erste Schienenprofil 2 eine erste obere Laufbahn 21 und eine unterhalb der ersten Laufbahn 21 angeordnete zweite Laufbahn 22.

Die Förderkette 9 des ersten Schienenprofils 2 ist in der ersten Laufbahn 21 des Schienenprofils 2 in einer Förderrichtung x kontinuierlich bewegbar. Die Förderkette 9 ist dabei mithilfe von längs des Schienenprofils 2 angeordneten Reibrollen antreibbar.

In der zweiten Laufbahn 22 sind rollbar gelagerte Kopfteile 81 jeweiliger Halteadapter 8 geführt, die der Halterung der zu befördernden Gegenstände 13 dienen. Dabei ist das Kopfteil 81 der Halteadapter 8 mit der Förderkette 9 gekoppelt, wie es beispielsweise in den Figuren 3 und 4 erkennbar ist.

Die Fördervorrichtung weist des Weiteren wenigstens einen Sortierabschnitt mit einer in Förderrichtung x₁ nachfolgenden Weiche 4 auf, über die die Halteadapter 8 aus dem ersten Schienenprofil 2 heraus in ein zweites Schienenprofil 10 überführbar sind.

Dieser Sortierabschnitt beinhaltet dabei in einer Ausführungsvariante eine Leseeinrichtung, mit der vorzugsweise am jeweiligen Halteadapter 8 enthaltene Informationen über den zu befördernden Gegenstand 13 auslesbar sind.

Alternativ erfolgt das Einlesen der Information über den am jeweiligen Halteadapter 8 angebrachten zu befördernden Gegenstand 13 bei der Aufgabe des Halteadapters 8 und damit des an diesem angebrachten zu befördernden Gegenstand 13 in das ersten Schienenprofil 2. Bei der Weiterförderung des jeweiligen Halteadapters 8 entlang des ersten Schienenprofils 2 erfolgt die Steuerung, an welcher der entlang des ersten Schienenprofils 2 hintereinander angeordneten Weichen 4 der Halteadapter 8 ausgeschleust werden soll, über ein Auszählen von Takten. Ein Takt entspricht dabei vorzugsweise einer vordefinierten Wegstrecke des ersten Schienenprofils 2. Die Entfernung von der Aufgabestelle des Gegenstandes 13 in das erste Schienenprofil 2 zu den jeweiligen Weichen 4 kann damit anhand von Takten bestimmt werden. Dadurch ist die Steuerung des Ausschleusvorgangs über eine vorbestimmte Weiche 4 unabhänig von der Laufgeschwindigkeit der Förderkette 9 des ersten Schienenprofils 2.

Um den Schaltpunkt eines jeweiligen Stellelements der Weiche 4, das den weiteren Weg des Halteadapters 8 bestimmt, entweder weiter entlang des ersten Schienenprofils 2 oder aus dem ersten Schienenprofil 2 heraus, noch genauer anzusteuern, ist in einer bevorzugten Ausführungsvariante in einem Bereich des ersten Schienenprofils 2 vor dem Stellelement der jeweiligen Weiche 4 ein Sensor, vorzugsweise ein Lichtsensor am ersten Schienenprofil 2 oder an einem Gehäuse der Weiche 4 angeordnet, mit dem die Ankunft eines Halteadapters 8 feststellbar ist. Damit ist der Schaltzeitpunkt der Weiche 4 auch bei längeren Förderstrecken, bei denen aufgrund evtl. auftretender Längendehnungen der Förderkette 9 die Takte nicht exakt der zurückgelegten Strecke des Halteadapters von der Aufgabestelle bis zur jeweiligen Weiche 4 entspricht, noch genauer feststellbar.

Ergibt sich aus den so eingelesenen Informationen, dass der zu befördernde Gegenstand 13 über die Weiche 4 aus dem ersten Schienenprofil 2 herausgefördert werden soll, wird entsprechend ein Stellelement der Weiche 4 umgestellt, so dass der Halteadapter 8 beim Weitertransport in ein Schienenprofil 5 der Weiche 4 überführt wird.

Die Weiche 4 weist im Wesentlichen das oben erwähnte hier nicht dargestellte Stellelement auf sowie ein Schienenprofil 5, in dem das Kopfteil 81 des jeweiligen Halteadapters 8 geführt ist.

Zur Beförderung der Halteadapter 8 und der an diesen hängenden Gegenständen 13 weist die Weiche 4 des Weiteren ein Antriebsband 7 auf.

Dass Antriebsband 7 steht dabei mit den jeweiligen Halteadapter 8 in Kontakt und bewegt diese entlang des Schienenprofils 5 hin zu dem zweiten Schienenprofil 10.

Das Antriebsband 7 weist dabei, wie in Figur 2 zu erkennen ist, bevorzugt an einer Außenfläche des Antriebsbands 7 senkrecht zur Förderrichtung x₂ vorstehende Erhebungen 72 zur Weiterbeförderung der Halteadapter 8 auf.

Die Erhebungen 72 sind dabei besonders bevorzugt als elastisch biegbare Finger ausgebildet.

Zur Führung des Antriebsbandes 7 sind in vorgegebenen Abständen Lagerrollen 71 vorgesehen, die mit der Innenfläche des Antriebsbandes 7 in Kontakt stehen und dieses aufspannen.

Das Antriebsband 7 wird dabei nicht über eine separate motorisch angetriebene Antriebsrolle angetrieben, sondern ist über einen Übertrieb 6 antreibbar.

Dieser Übertrieb 6 weist bevorzugt einen mit der im ersten Schienenprofil 2 angeordneten Förderkette 9 gekoppelte Antriebsrolle 61 und eine mit dieser über ein Kopplungselement 64 gekoppelte, das Antriebsband 7 antreibende Übertragungsrolle 67 auf.

Dadurch wird das Antriebsband 7 der Weiche 4 über die im ersten Schienenprofil 2 laufende Förderkette 9 und damit über die die Förderkette 9 antreibenden Antriebsrollen 31 angetrieben.

Der Übertrieb 6 ist dabei so ausgelegt, dass die Laufgeschwindigkeit des Antriebsbandes 7 der Weiche 4 größer ist als die Laufgeschwindigkeit der Förderkette 9.

Wie in einer Zusammenschau der Figuren 2 und 4 gezeigt, ist bevorzugt auf einer ersten Drehachse 63 der der Antriebsrolle 61 eine erste Übersetzungsrolle 62 drehfest zur ersten Drehachse 63 gelagert.

Die erste Übersetzungsrolle 62 ist über ein bevorzugt als Riemen ausgebildetes Kopplungselement 64 mit einer auf einer zweiten Drehachse 65 drehfest gelagerten zweiten Übersetzungsrolle 66 gekoppelt. Die Übertragungsrolle 67 ist dabei drehfest zur Drehachse 65 gelagert und mit dem Antriebsband 7 gekoppelt.

Die erste Drehachse 63 und die zweite Drehachse 65 sind dabei drehbar gegenüber einem Gehäuse der Weiche 4 gelagert.

Denkbar wäre beispielsweise auch, anstelle des als Riemen ausgebildeten Kopplungselements 64 ein Übersetzungsgetriebe mit Zahnrädern einzusetzen.

Die Antriebseinheit 3 zum Antrieb der Förderkette 9 ist, wie in Figur 2 dargestellt, bevorzugt unmittelbar gegenüber der mit der Förderkette 9 gekoppelten Antriebsrolle 61 des Übertriebs 6 angeordnet.

Die Antriebseinheit 3 besteht dabei im Wesentlichen aus einem Motor und einer Antriebsrolle 31 (gezeigt in Figur 4).

Das Schienenprofil 5 der Weiche 4 ist bevorzugt im Wesentlichen kreisbogenförmig geformt, so dass die an jeweiligen Adaptern 8 angehängten zu befördernden Gegenstände 13 winklig zum ersten Schienenprofil 2 von diesem wegtransportiert werden. Die Übersetzung des Übertriebs 6 ist bevorzugt so ausgelegt, dass die Geschwindigkeit des Antriebsbandes 7 der Weiche 4 zwischen 120 und 200 % der Geschwindigkeit der Förderkette 9 beträgt.

Dadurch wird wirksam vermieden, dass ein über die Weiche 4 abtransportierter zu befördernder Gegenstand 13 mit einem entlang des ersten Schienenprofils 2 weitertransportierten nachfolgenden zu befördernden Gegenstand 13 kollidiert und in eine nicht erwünschte Drehbewegung versetzt wird.

### Bezugszeichenliste

- 2: erstes Schienenprofil
- 21: erste obere Laufbahn
- 22: zweite Laufbahn

- 3: Antriebseinheit
- 31: Antriebsrolle

- 4: Weiche
- 5: Schienenprofil

- 6: Übertrieb
- 61: Antriebsrolle
- 62: Übersetzungsrolle
- 63: Erste Drehachse
- 64: Kopplungselement
- 65: Zweite Drehachse
- 66: Zweite Übersetzungsrolle
- 67: Übertragungsrolle

- 7: Antriebsband
- 71: Lagerrolle
- 72: Erhebungen

- 8: Halteadapter
- 81: Kopfteil

- 9: Förderkette
- 10: Zweites Schienenprofil
- 11: Weiche
- 12: Drittes Schienenprofil
- 13: Gegenstand
- 14: Stoppeinrichtung

- x₁: Förderrichtung
- x₂: Förderrichtung

## Patentansprüche

1. Fördervorrichtung zur Beförderung von hängenden Gegenständen, aufweisend
- ein erstes Schienenprofil (2) mit einer ersten, oberen Laufbahn (21) und einer unterhalb der ersten Laufbahn (21) angeordneten zweiten Laufbahn (22),
- eine durch Reibrollen antreibbare Förderkette (9), die in der ersten Laufbahn (21) des Schienenprofils (2) in einer Förderrichtung (x₁) kontinuierlich bewegbar ist,
- Halteadapter (8) zur Halterung von zu befördernden Gegenständen, mit jeweils einem in der zweiten Laufbahn (22) des Schienenprofils (2) rollbar gelagerten Kopfteil (81), das mit der Förderkette (9) gekoppelt ist,
- wenigstens einen Sortierabschnitt mit einer in Förderrichtung (x) nachfolgenden Weiche (4), über die die Halteadapter (8) aus dem ersten Schienenprofil (2) heraus in ein zweites Schienenprofil (10) überführbar sind,
**dadurch gekennzeichnet, dass**
- die Weiche (4) einen Übertrieb (6) und ein Antriebsband (7) aufweist,
- wobei der Übertrieb (6) derart ausgelegt ist, dass die Laufgeschwindigkeit des Antriebsbandes (7) im Betrieb größer ist als die Laufgeschwindigkeit der Förderkette (9) und dass der Übertrieb (6) eine mit der im ersten Schienenprofil (2) angeordneten Förderkette (9) gekoppelte Antriebsrolle (61) und eine mit dieser über ein Kopplungselement (64) gekoppelte, das Antriebsband (7) antreibende Übertragungsrolle (67) aufweist.

2. Fördervorrichtung nach Anspruch 1, **dadurch gekennzeichnet, dass** auf einer ersten Drehachse (63) der Antriebsrolle (61) eine erste Übersetzungsrolle (62) drehfest zur ersten Drehachse (63) gelagert ist, die über das Kopplungselement (64) mit einer auf einer zweiten Drehachse (65) drehfest gelagerten zweiten Übersetzungsrolle (66) gekoppelt ist, wobei auf der zweiten Drehachse (65) die mit dem Antriebsband (7) gekoppelte Übertragungsrolle (67) drehfest zur Drehachse (65) gelagert ist.

3. Fördervorrichtung nach Anspruch 1 oder 2, **dadurch gekennzeichnet, dass** das Kopplungselement (64) als Riemen ausgebildet ist.

4. Fördervorrichtung nach einem der vorstehenden Ansprüche, **dadurch gekennzeichnet, dass** an einer Außenfläche des Antriebsbandes (7) senkrecht zur Förderrichtung (x₂) vorstehende Erhebungen (72) zur Weiterbeförderung der Halteadapter (8) in Förderrichtung (x₂) ausgebildet sind.

5. Fördervorrichtung nach Anspruch 4, **dadurch gekennzeichnet, dass** die Erhebungen (72) als elastisch biegbare Finger ausgebildet sind.

## Claims

1. Conveyor for conveying suspended objects, comprising
- a first rail profile (2) having a first upper track (21) and a second track (22) arranged below the first track (21),
- a conveyor chain (9) which can be driven by friction rollers and can be moved continuously in a direction of conveyance (x₁) in the first track (21) of the rail profile (2),
- holding adapters (8) for holding objects to be conveyed, each having a head part (81) which is mounted so as to be able to roll in the second track (22) of the rail profile (2) and is coupled to the conveyor chain (9),
- at least one sorting portion having a switch (4) which follows in the direction of conveyance (x) and via which the holding adapters (8) can be transferred from the first rail profile (2) to a second rail profile (10),
**characterised in that**
- the switch (4) has an overdrive (6) and a drive belt (7),
- wherein the overdrive (6) is designed in such a manner that during operation the running speed of the drive belt (7) is higher than the running speed of the conveyor chain (9) and the overdrive (6) has a drive roller (61), which is coupled to the conveyor chain (9) arranged in the first rail profile (2), and a transfer roller (67) which is coupled to said drive roller via a coupling element (64) and drives the drive belt (7).

2. Conveyor as claimed in claim 1, **characterised in that** a first transmission roller (62) is mounted on a first rotary spindle (63) of the drive roller (61) for conjoint rotation with the first rotary spindle (63), said first transmission roller being coupled via the coupling element (64) to a second transmission roller (66) mounted on a second rotary spindle (65) for conjoint rotation therewith, wherein the transfer roller (67) coupled to the drive belt (7) is mounted on the second rotary spindle (65) for conjoint rotation with the rotary spindle (65).

3. Conveyor as claimed in claim 1 or 2, **characterised in that** the coupling element (64) is designed as a belt.

4. Conveyor as claimed in any one of the preceding claims, **characterised in that** in order to convey the holding adapters (8) further in the direction of conveyance (x₂), elevations (72) which protrude perpendicularly with respect to the direction of conveyance (x₂) are formed on an outer surface of the drive belt (7).

5. Conveyor as claimed in claim 4, **characterised in that** the elevations (72) are designed as elastically bendable fingers.

## Revendications

1. Dispositif de transport destiné à transporter des objets suspendus et comprenant
- un premier profilé de rail (2) comportant un premier chemin de roulement (21) supérieur et un deuxième chemin de roulement (22) disposé sous le premier chemin de roulement (21),
- une chaîne de transport (9) qui peut être entraînée par des rouleaux à friction et qui peut être déplacée en continu dans une direction de transport (x₁) dans le premier chemin de roulement (21) du profilé de rail (2),
- des adaptateurs de retenue (8) destinés à maintenir des objets à transporter et comportant chacun une partie de tête (81) qui est montée de manière à pouvoir rouler dans le deuxième chemin de roulement (22) du profilé de rail (2) et qui est accouplée à la chaîne de transport (9),
- au moins une section de tri comportant un aiguillage (4) qui est disposé en aval dans le sens de transport (x) et qui permet de transférer les adaptateurs de retenue (8) du premier profilé de rail (2) dans un deuxième profilé de rail (10), **caractérisé en ce que**
- l'aiguillage (4) comporte une surmultiplication (6) et une bande de transmission (7),
- la surmultiplication (6) étant conçue de telle sorte que la vitesse de défilement de la bande d'entraînement (7) soit supérieure en fonctionnement à la vitesse de défilement de la chaîne de convoyage (9) et **en ce que** la surmultiplication (6) comporte un rouleau d'entraînement (61), accouplé à la chaîne de transport (9) disposée dans le premier profilé de rail (2), et un rouleau de transmission (67) accouplé au rouleau d'entraînement (61) par le biais d'un élément d'accouplement (64) et entraînant la bande d'entraînement (7).

2. Dispositif de transport selon la revendication 1, **caractérisé en ce qu'**un premier rouleau de transfert (62) est monté sur un premier axe de rotation (63) du rouleau d'entraînement (61) solidairement en rotation par rapport au premier axe de rotation (63) qui est accouplé par le biais de l'élément d'accouplement (64) à un deuxième rouleau de transfert (66) monté solidairement en rotation sur le deuxième axe de rotation (65), le rouleau de transmission (67) accouplé à la bande d'entraînement (7) étant monté sur le deuxième axe de rotation (65) solidairement en rotation par rapport à l'axe de rotation (65).

3. Dispositif de transport selon la revendication 1 ou 2, **caractérisé en ce que** l'élément d'accouplement (64) est conçu comme une courroie.

4. Dispositif de transport selon l'une des revendications précédentes, **caractérisé en ce que** des saillies (72) se projetant perpendiculairement à la direction de transport (X₂) sont formées sur une surface extérieure de la bande d'entraînement (7) en vue du transport ultérieur des adaptateurs de retenue (8) dans la direction de transport (x₂).

5. Dispositif de transport selon la revendication 4, **caractérisé en ce que** les saillies (72) sont conçues comme des doigts flexibles élastiquement.
